# EUROPÄISCHE PATENTANMELDUNG

(11) **EP 3 293 857 A1**
(43) Veröffentlichungstag der Anmeldung: **14.03.2018**
(21) Anmeldenummer: 16187557.0
(22) Anmeldetag: 07.09.2016
(51) Int. Cl.: H02J 50/40, H02J 50/80

(54) **ANORDNUNG ZUR ÜBERWACHUNG VON MINDESTENS EINEM IN EINEM GEBÄUDE ANGEORDNETEN FUNKTIONSELEMENT**

(71) Anmelder: Möhlenhoff GmbH, 38229 Salzgitter (DE)
(72) Erfinder: Büchel, Oliver, 31162 Bad Salzdetfurth (DE)
(74) Vertreter: Döring, Roger

(57) **Zusammenfassung**

Es wird eine Anordnung zur Überwachung von mindestens einem in einem Gebäude angeordneten Funktionselement angegeben, welches physikalische und/oder chemische Effekte erfaßt. In mindestens einem Raum des Gebäudes ist mindestens ein Funktionselement angebracht, das zumindest mit einer Antenne und einem Sender bestückt ist, der vom Funktionselement erzeugte Daten als Funksignale zu einer Zentrale des Gebäudes sendet. Das Funktionselement weist zusätzlich eine mit mindestens einer Empfangsantenne verbundene Gleichrichterschaltung aufweist, der von der Empfangsantenne eine durch im jeweiligen Raum des Gebäudes verfügbare elektromagnetische Wellen empfangene Wechselspannung zugeführt wird. An die an einem Ausgang der Gleichrichterschaltung bereitgestellte Gleichspannung ist ein wiederaufladbarer Energiespeicher angeschlossen. In der Zentrale des Gebäudes sind zur Bereitstellung von elektromagnetischen Wellen ein elektromagnetische Strahlung aussendender Sender und ein Empfänger zum Empfang von Daten angeordnet, die von dem Funktionselement gesendet werden. Der Sender des Funktionselements sendet neben den Daten auch Signale an den Sender der Zentrale, welche dem Ladezustand des wiederaufladbaren Energiespeichers entsprechen.

## Beschreibung

Die Erfindung betrifft eine Anordnung zur Überwachung von mindestens einem in einem Gebäude angeordneten Funktionselement, welches physikalische und/oder chemische Effekte erfaßt, bei welcher in mindestens einem Raum des Gebäudes mindestens ein Funktionselement angebracht ist, das zumindest mit einer Antenne und einem Sender bestückt ist, der vom Funktionselement erzeugte Daten als Funksignale zu einer Zentrale des Gebäudes sendet (DE 10 2012 015 892 A1).

Funktionselemente im Sinne der Erfindung können beispielsweise folgende "Bauteile" sein, die an geeigneter Stelle in Räumen eines Gebäudes angeordnet sind:
Fensterkontakte, Türkontakte, Steckdosen, Schaltsteckdosen, Wandtaster, Wandthermostate, Heizkörperthermostate, Rauchmelder, Bewegungsmelder, CO2-Sensoren, VOC (Volatile Organic Compounds)-Sensoren und Sensoren zur Messung der relativen Feuchtigkeit. Die Erfindung ist nicht auf diese Auswahl von Funktionselementen beschränkt, sondern es kann sich auch um alle möglichen anderen Funktionselemente handeln, welche beispielsweise im Rahmen der "Smart Home Technologie" zum Erfassen von physikalischen und/oder chemischen Effekten in Räumen von Gebäuden geeignet sind.

Die bekannte Anordnung nach der eingangs erwähnten DE 10 2012 015 892 A1 betrifft die Klimatisierung von Räumen eines Gebäudes. In den Räumen sind als Funktionselemente Thermostate angeordnet. In einer Zentrale des Gebäudes ist ein Heizkreisverteiler installiert, der einen Regler und eine der Anzahl von im Gebäude vorhandenen Heizkreisen entsprechende Anzahl von Ventilen aufweist, von denen jeweils eins in einen Zulauf für einen Wärmeträger eines Heizkreises eingebaut ist. Dem Regler werden von in den Thermostaten der einzelnen Räume angebrachten Sendern über Funk Signale zugeführt, nach deren Maßgabe die jeweiligen Ventile geöffnet oder geschlossen werden.

Der Erfindung liegt die Aufgabe zugrunde, die eingangs geschilderte Anordnung so weiterzubilden, dass sie für in Räumen eines Gebäudes angebrachte Funktionselemente einsetzbar ist, und zwar unabhängig von deren Art und Aufbau.

Diese Aufgabe wird gemäß der Erfindung dadurch gelöst,
- dass das Funktionselement zusätzlich eine mit mindestens einer Empfangsantenne verbundene Gleichrichterschaltung aufweist, der von der Empfangsantenne eine durch im jeweiligen Raum des Gebäudes verfügbare elektromagnetische Wellen empfangene Wechselspannung zugeführt wird,
- dass an die an einem Ausgang der Gleichrichterschaltung bereitgestellte Gleichspannung ein wiederaufladbarer Energiespeicher angeschlossen ist, welcher der Spannungsversorgung von Stromverbrauchern des Funktionselements dient,
- dass in der Zentrale des Gebäudes zur Bereitstellung von elektromagnetischen Wellen ein elektromagnetische Strahlung aussendender Sender angeordnet ist,
- dass in der Zentrale ein Empfänger zum Empfang von Daten angeordnet ist, die von einem Funktionselement gesendet werden, und
- dass der Sender des Funktionselements neben den Daten auch Signale an den Sender der Zentrale sendet, welche dem Ladezustand des wiederaufladbaren Energiespeichers entsprechen.

Diese Anordnung ist zur Überwachung von mindestens einem in zumindest einem Raum eines Gebäudes angeordneten Funktionselement geeignet. Mögliche Funktionselemente sind als Beispiele im Vorangehenden aufgeführt. Mit Vorteil kann in jedem Raum des Gebäudes mindestens ein Funktionselement angebracht sein. In den einzelnen Räumen des Gebäudes können vorzugsweise auch zwei oder mehr Funktionselemente vorhanden sein. Die Überwachung des Funktionselements bzw. der Funktionselemente schließt eine Auswertung der Daten ein, welche vom Sender eines jeweiligen Funktionselements zum Empfänger der Zentrale gesendet werden. Die Auswertung kann auch eine Anzeige an einer im Gebäude, mit Vorteil in der Zentrale desselben, installierten Anzeigeeinrichtung bedeuten, so dass beispielsweise auf Daten eines Rauchmelders oder eines Bewegungsmelders reagiert werden. Insgesamt ist die Anordnung mit Vorteil für alle Funktionselemente geeignet, die im Rahmen der "Smart Home Technologie" in Gebäuden installiert sind bzw. werden. Von besonderem Vorteil für die Anordnung ist der in der Zentrale angeordnete Sender, durch welchen sichergestellt ist, dass für die im Gebäude angebrachten Funktionselemente ständig eine ausreichend starke elektromagnetische Strahlung zur Verfügung steht.

Für die Spannungsversorgung von im jeweiligen Funktionselement enthaltenen Stromverbrauchern, insbesondere des Senders, wird bei dieser Anordnung ein wiederaufladbarer Energiespeicher eingesetzt, dessen Ladezustand allein durch äußere elektromagnetische Felder bestimmt wird. Dazu wird mit Vorteil die von der Zentrale des Gebäudes gesendete elektromagnetische Strahlung ausgenutzt. Es können aber auch zusätzlich, ohnehin in den Räumen vorhandene elektromagnetische Felder ausgenutzt werden, wie sie beispielsweise bei dem bekannten Netzwerk "WLAN" vorhanden sind. Auch die Signale von Mobilfunk sowie Radio und Fernsehen können ausgenutzt werden. Eine entsprechende Empfangsantenne kann mit Vorteil breitbandig im Bereich von 800 MHz bis 2400 MHz arbeiten. Sie kann als Planarantenne ausgeführt sein.

Die von der Empfangsantenne bzw. den Empfangsantennen zu empfangenden Frequenzen liegen im Bereich der vom Gesetzgeber zugelassenen ISM- und/oder SRD-Bänder. Geeignete Frequenzbereiche liegen beispielsweise bei 868 MHz, die auch zur Übertragung der Signale vom Thermostat zur Zentrale verwendet werden können, sowie bei 2,4 GHz, die beispielsweise beim WLAN eingesetzt werden, oder auch bei 13,56 MHz. In einem breitbandigen Konzept kann auch ein Frequenzbereich von 1 GHz bis 3,5 GHz verwendet werden. In einem schmalbandigen Bereich kann der Frequenzbereich beispielsweise zwischen 1,8 GHz und 1,9 GHz liegen.

Die Funktionselemente enthalten also eine Vorrichtung zum "Ernten" von Energie aus elektromagnetischer Strahlung. Dabei wird der Begriff "Ernten" für das Empfangen und Nutzen der im Bereich der Funktionselemente vorhandenen Wechselspannung verwendet, welche aus elektromagnetischen Wellen abgeleitet wird. Geerntet wird dabei mit Vorteil Energie aus einer elektromagnetischen Strahlung, welche den gleichen Frequenzbereich hat, der - wie schon erwähnt - auch zur Kommunikation des Senders mit der Zentrale dient. Es ist jedoch auch möglich, wie ebenfalls schon erwähnt, mindestens einen weiteren Frequenzbereich oder mehrere weitere Frequenzbereiche zu nutzen.

Die für das "Ernten" der Wechselspannung dienende elektromagnetische Strahlung kann also aus unterschiedlichen Quellen stammen. Auf jeden Fall wird in der Zentrale der Sender installiert, welcher elektromagnetische Strahlung mit ausreichender Stärke sendet, so dass auch Empfangsantennen von Funktionselementen in weiter entfernten Räumen noch eine ausreichend hohe Wechselspannung empfangen. Dabei kann dieser Sender auch elektromagnetische Strahlung mit unterschiedlichen Frequenzen aussenden, um beispielsweise unterschiedliche Strahlungsdichten auszugleichen, die durch Absorption, Reflexionen und Interferenzen im Bereich der unterschiedlichen Räume des Gebäudes gebildet werden können.

Prinzipiell kann auch in jedem Raum des Gebäudes oder in ausgewählten Räumen desselben ein elektromagnetische Energie abstrahlender Sender angeordnet werden. Das bietet sich insbesondere für Räume an, die weit von der Zentrale entfernt sind.

In einem Funktionselement ist mindestens eine Antenne angeordnet, die dann einerseits als Empfangsantenne zum Ernten der elektromagnetischen Energie und andererseits als Sendeantenne für die vom Sender zur Zentrale zu übertragenden Daten dient. Für diese Daten kann aber auch eine separate Sendeantenne vorgesehen sein. Zweckmäßig werden in einem Funktionselement zwei oder mehr als Empfangsantennen dienende Antennen verwendet, die in ihrem Aufbau jeweils auf die Frequenzbereiche abgestimmt sind, aus denen Energie geerntet werden soll.

Aus den von einer breitbandigen Empfangsantenne bzw. zwei oder mehr solcher Antennen empfangenen Wechselspannungen werden in dem geschilderten Erntevorgang nur kleine Leistungen aufgenommen. Sie können beispielsweise zwischen 12,5 pW und 400 pW liegen. Es ist daher zweckmäßig und vorteilhaft, wenn eine spannungserhöhende Gleichrichterschaltung mit einem Netzwerk eingesetzt wird, mittels dessen das Spannungsniveau am Ausgang der Gleichrichterschaltung angehoben werden kann. Ein solches Netzwerk ist beispielsweise ein Spannungsverdoppler oder eine Kaskadenschaltung. Am Ausgang der Gleichrichterschaltung stehen dann beispielsweise zwischen 1,2 V und 1,5 V liegende Spannungen zur Verfügung.

Zwischen der Antenne bzw. den Antennen und der Gleichrichterschaltung kann mit Vorteil eine Schaltung zur Anpassung der Impedanz der Übertragungswege zu den nachfolgenden Schaltungselementen angeordnet sein, durch welche mögliche Verluste minimiert werden.

Als wiederaufladbare Energiespeicher können beispielsweise und mit Vorteil Kondensatoren oder Akkumulatoren eingesetzt werden, die durch die geerntete Energie ständig geladen werden. Zusätzlich kann in den Funktionselementen auch eine Batterie, z. B. eine Knopfzelle, angebracht werden, welche der Absicherung der Energieversorgung der Stromverbraucher des jeweiligen Funktionselements dient. Der dann realisierte Hybridbetrieb aus Ernten von Energie und Batterie führt dementsprechend zu einer hohen Funktionssicherheit der Anordnung. Die Lebensdauer der Batterie wird außerdem wesentlich verlängert, so dass während der Lebensdauer des jeweiligen Funktionselements in der Regel kein Batteriewechsel erforderlich ist.

Die Funktionselements erfassen neben der Übermittlung der Daten an die Zentrale auch den Ladezustand ihres Energiespeichers und melden denselben an die Zentrale. Die Zentrale kann entsprechend dieser Meldung gegebenenfalls von dort abgestrahlte elektromagnetische Strahlung anpassen. Bei einem zu niedrigen Ladestand des Energiespeichers kann die Sendeleistung erhöht werden, während dieselbe bei vollem Energiespeicher reduziert werden kann.

Ein Ausführungsbeispiel der Anordnung nach der Erfindung ist in den Zeichnungen dargestellt.

Es zeigen:
Fig. 1 in schematischer Darstellung ein Schnittbild eines Gebäudes mit mehreren Räumen.
Fig. 2 in schematischer Darstellung eine bei der Anordnung nach der Erfindung einsetzbare elektrische Schaltung.
Fig. 3 Einzelheiten aus Fig. 2 in genauerer Darstellung.

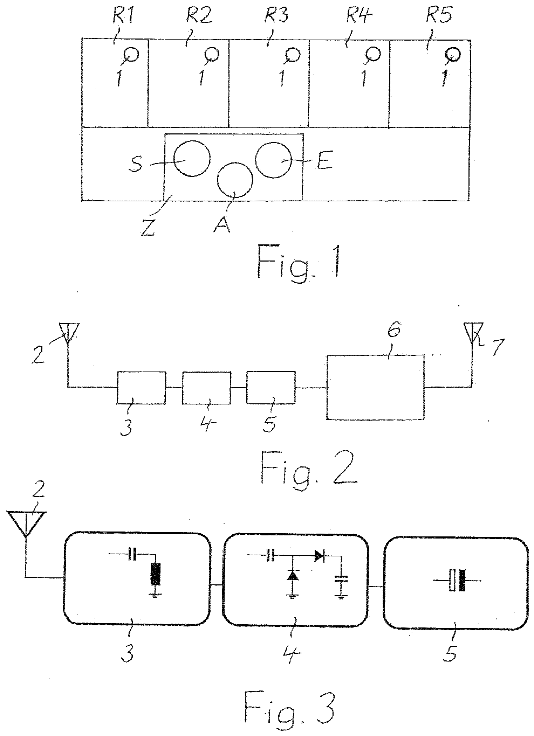

Fig.1 zeigt in einer sehr schematischen Darstellung eine Ansicht eines Gebäudes mit fünf Räumen R1 bis R5, in denen jeweils mindestens ein Funktionselement angeordnet ist, das als Kreis 1 dargestellt ist. Der Kreis 1 steht auch für mehr als ein Funktionselement, insbesondere für alle in einem der Räume R1 bis R5 angebrachten Funktionselemente.

Zum Gebäude gehört auch eine Zentrale Z, in welcher ein Sender S angeordnet ist, welcher elektromagnetische Strahlung mit Frequenzen bzw. Frequenzbereichen aussendet, die im Bereich der vom Gesetzgeber zugelassenen ISM- und/oder SRD-Bänder liegen. Auch und insbesondere die Wechselspannung der vom Sender S gesendeten elektromagnetischen Strahlung wird von in den Funktionselementen 1 angeordneten Antennen empfangen bzw. "geerntet". Das gilt auch für die im Vorangehenden ausführlich erläuterte elektromagnetische Strahlung aus anderen Quellen. In der Zentrale Z des Gebäudes ist auch ein Empfänger E zum Empfang der von Funktionselementen 1 gesendeten Daten vorhanden. Im Gebäude befindet sich außerdem eine Anzeigeeinrichtung A, in welcher das Ergebnis der Auswertung der vom Empfänger E empfangenen Daten angezeigt wird. Die Anzeigeeinrichtung A ist mit Vorteil ebenfalls in der Zentrale Z positioniert.

Der "Erntevorgang" der elektromagnetischen Strahlung wird beispielsweise anhand der Fig. 2 und 3 erläutert. Dabei zeigt Fig. 2 rein schematisch den grundsätzlichen Aufbau einer Anordnung nach der Erfindung, mit welcher jedes Funktionselement 1 ausgerüstet ist:
Von einer mit Vorteil breitbandigen Empfangsantenne 2 können Wechselspannungen aus elektromagnetischer Strahlung auch in verschiedenen Frequenzbereichen aufgenommen werden. Das gilt auch für Wechselspannungen mit kleiner Leistung. An die Empfangsantenne 2 ist eine Anpassungsschaltung 3 angeschlossen, welche der Anpassung der Impedanz der Übertragungswege zu den nachfolgenden Schaltungselementen und zur Minimierung von Verlusten dient. Ihr möglicher schaltungstechnischer Aufbau geht beispielsweise aus Fig. 3 hervor.

An die Anpassungsschaltung 3 ist eine Gleichrichterschaltung 4 angeschlossen, die mit Vorteil als spannungserhöhende Gleichrichterschaltung in Form einer Spannungsverdoppler-Schaltung oder als mehrstufige Kaskadierungsschaltung ausgeführt sein kann. In Fig. 3 ist eine Stufe einer solchen Schaltung angedeutet. Der Ausgang der Gleichrichterschaltung 4 ist mit einem wiederaufladbaren Energiespeicher 5 verbunden, der beispielsweise entsprechend Fig. 3 als Kondensator oder als Akkumulator ausgeführt sein kann.

An den Energiespeicher 5 sind die nur durch einen Kasten 6 angedeuteten Stromverbraucher eines jeweiligen Funktionselements 1 angeschlossen, welches physikalische und/oder chemische Effekte erfaßt. Diese Stromverbraucher sind an sich bekannt. Es kann sich beispielsweise um einen Sender oder einen Transceiver und einen Mikroprozessor handeln. Eine Antenne 7 kann eine Sendeantenne sein, welche die vom Funktionselement 1 erfaßten Werte als Daten an die Zentrale Z des Gebäudes sendet.

Die Funktionsweise der Anordnung nach der Erfindung wird im Folgenden noch einmal anhand von zwei Beispielen erläutert:

### Beispiel 1

Überwacht wird als Funktionselement 1 ein in einem der Räume R1 bis R5 angebrachter Rauchmelder. Solange derselbe ohne Störung arbeitet, empfängt der Empfänger E der Zentrale Z keine oder gleichbleibende vom Sender des Rauchmelders gesendete Daten. Wenn der Rauchmelder aufgrund einer Rauchentwicklung im zugehörigen Raum anspricht, werden entsprechend veränderte Daten an den Empfänger E gesendet und in der Anzeigeeinrichtung A zur Anzeige gebracht. Es kann in diesem Fall zusätzlich ein Alarm ausgelöst werden, so dass eine schnelle Reaktion von zuständigem Personal erfolgen kann.

### Beispiel 2

Ein Fenster soll im Normalfall geschlossen sein. Die in der entsprechenden Verriegelung oder auch an anderer Stelle vorhandenen Kontakte sind als Funktionselement 1 mit einer Anordnung nach der Erfindung ausgerüstet. Deren Sender sendet für den Normalfall keine oder gleichbleibende Daten an den Empfänger E der Zentrale Z. Wenn das Fenster geöffnet wird, ändern sich die zum Empfänger E übertragenen Daten. Das wird an der Anzeigeeinrichtung A angezeigt, so dass von zuständigem Personal schnell reagiert werden kann.

## Patentansprüche

1. Anordnung zur Überwachung von mindestens einem in einem Gebäude angeordneten Funktionselement, welches physikalische und/oder chemische Effekte erfaßt, bei welcher in mindestens einem Raum des Gebäudes mindestens ein Funktionselement angebracht ist, das zumindest mit einer Antenne und einem Sender bestückt ist, der vom Funktionselement erzeugte Daten als Funksignale zu einer Zentrale des Gebäudes sendet, **dadurch gekennzeichnet,**
- **dass** das Funktionselement (1) zusätzlich eine mit mindestens einer Empfangsantenne (2) verbundene Gleichrichterschaltung (4) aufweist, der von der Empfangsantenne eine durch im jeweiligen Raum des Gebäudes verfügbare elektromagnetische Wellen empfangene Wechselspannung zugeführt wird,
- **dass** an die an einem Ausgang der Gleichrichterschaltung (4) bereitgestellte Gleichspannung ein wiederaufladbarer Energiespeicher (5) angeschlossen ist, welcher der Spannungsversorgung von Stromverbrauchern des Funktionselements (1) dient,
- **dass** in der Zentrale (Z) des Gebäudes zur Bereitstellung von elektromagnetischen Wellen ein elektromagnetische Strahlung aussendender Sender (S) angeordnet ist,
- **dass** in der Zentrale (Z) ein Empfänger (E) zum Empfang von Daten angeordnet ist, die von einem Funktionselement (1) gesendet werden, und
- **dass** der Sender des Funktionselements (1) neben den Daten auch Signale an den Sender (S) der Zentrale (Z) sendet, welche dem Ladezustand des wiederaufladbaren Energiespeichers (5) entsprechen.

2. Anordnung nach Anspruch 1, **dadurch gekennzeichnet, dass** in dem Gebäude eine Anzeigeeinrichtung (A) zur Anzeige der vom Empfänger (E) der Zentrale (Z) empfangenen Daten angebracht ist.

3. Anordnung nach Anspruch 1, **dadurch gekennzeichnet, dass** eine spannungserhöhende Gleichrichterschaltung (4) eingesetzt ist.

4. Anordnung nach Anspruch 3, **dadurch gekennzeichnet, dass** die Gleichrichterschaltung (4) eine Spannungsverdoppler-Schaltung ist.

5. Anordnung nach Anspruch 3, **dadurch gekennzeichnet, dass** die Gleichrichterschaltung (4) eine mehrstufige Kaskadierungsschaltung ist.

6. Anordnung nach Anspruch 1, **dadurch gekennzeichnet, dass** der Energiespeicher (5) ein Akkumulator ist.

7. Anordnung nach Anspruch 1, **dadurch gekennzeichnet, dass** der Energiespeicher (5) ein Kondensator ist.

8. Anordnung nach Anspruch 1, **dadurch gekennzeichnet, dass** zwischen der Empfangsantenne (2) und der Gleichrichterschaltung (4) eine Schaltung (3) zur Anpassung der Impedanz der Übertragungswege zu den nachfolgenden Schaltungselementen angeordnet ist.

9. Anordnung nach Anspruch 1, **dadurch gekennzeichnet, dass** in den Räumen des Gebäudes zumindest teilweise zum Aussenden von elektromagnetischer Strahlung geeignete Sender angeordnet sind.
